# EUROPÄISCHE PATENTSCHRIFT

(11) **EP 3 952 783 B1**
(45) Veröffentlichungstag und Bekanntmachung des Hinweises auf die Patenterteilung: **14.01.2026**
(21) Anmeldenummer: 20723790.0
(22) Anmeldetag: 14.04.2020
(51) Int. Cl.: A61C 7/02, A61C 19/00, H05B 1/02

(54) **VERFAHREN ZUM WIEDERHOLTEN AKTIVIEREN EINER KIEFERORTHOPÄDISCHEN KORREKTURVORRICHTUNG**
METHOD FOR THE REPEATED ACTIVATION OF AN ORTHODONTIC CORRECTION DEVICE
PROCÉDÉ POUR L'ACTIVATION RÉPÉTÉE D'UN DISPOSITIF DE CORRECTION ORTHODONTIQUE

(30) Priorität: 12.04.2019 DE 102019109807
(43) Veröffentlichungstag der Anmeldung: 16.02.2022
(73) Patentinhaber: K Line Europe GmbH, 40589 Düsseldorf (DE)
(72) Erfinder: KANDIL, Sherif, 40474 Düsseldorf (DE)
(74) Vertreter: Kalkoff & Partner Patentanwälte mbB
(86) Internationale Anmeldenummer: PCT/EP2020/060430
(87) Internationale Veröffentlichungsnummer: WO 2020/208259

(56) Entgegenhaltungen:
- WO-A1-00/32131
- WO-A1-2017/079157
- WO-A2-2006/071520
- WO-A2-2006/071520
- WO-A2-2006/071520
- WO-A2-2009/118601
- WO-A2-2009/118601
- CN-A- 103 433 086
- FR-A1- 2 947 443
- FR-A1- 2 947 443
- US-A1- 2003 019 497
- US-A1- 2003 019 497
- US-A1- 2004 209 218
- US-A1- 2005 277 084
- US-A1- 2006 099 545
- US-A1- 2011 031 232
- SST SENSING LTD.: "LIQUID LEVEL SWITCHES -Selection Guide", 2017, pages 1 - 19, XP093245323, Retrieved from the Internet <URL:https://www.processsensing.com/docs/datasheet/DS0032rev16_LLDigital.pdf> [retrieved on 20250131]
- CAROTENUTO CLAUDIA ET AL: "Viscoelasticity Evolution of Ethylene-Vinyl-Acetate Copolymers During Crystallization", CHEMICAL ENGINEERING TRANSACTIONS, vol. 74, 1 January 2019 (2019-01-01), IT, pages 1093 - 1098, XP093245850, ISSN: 2283-9216, Retrieved from the Internet <URL:https://www.aidic.it/cet/19/74/183.pdf> DOI: 10.3303/CET1974183

## Beschreibung

Die Erfindung betrifft ein nicht-therapeutisches Verfahren zum wiederholten Aktivieren einer kieferorthopädischen Korrekturvorrichtung.

Ein Polymer mit Gestalterinnerungsvermögen (shape memory polymer SMP) kann aus einer ersten gegebenen Gestalt durch eine Aktivierung, d. h. einen Reiz, z. B. einen thermischen, chemischen oder physikalischen Reiz, seine erste gegebene Gestalt in eine zweite gegebene andere Gestalt ändern. Ähnliche Eigenschaften weisen Hydrogele und Legierungen mit Gestalterinnerungsvermögen (shape memory alloys SMA) auf. Häufig wird eine Kombination der vorgenannten Werkstoffe eingesetzt, die unter Einwirken eines Reizes ihre Gestalt verändern. Insbesondere wird Wärme, also eine Temperaturerhöhung, zum Aktivieren eingesetzt. Die vorgenannten Werkstoffe weisen meist eine Glasübergangstemperatur (Tg) auf. Wird diese Glasübergangstemperatur infolge Wärmezufuhr erreicht, erfolgt der Wechsel von der ersten gegebenen in die zweite gegebene Gestalt. Um einen Gestaltwechsel mittels Temperaturerhöhung auszulösen, genügt es eine kritische Temperatur (Tkrit) zu überschreiten. Dies wird z. B. in der US 2006/0154195 A1 erläutert. Diese Eigenschaft der Gestaltänderung in Folge einer Temperaturerhöhung wird zunehmend auch für kieferorthopädische Korrekturvorrichtungen (dental aligner) genutzt, die aus einem SMP, einem Hydrogel oder einem SMA hergestellt sind. Während einer Zahnkorrektur ist es oft erforderlich, dass die kieferorthopädische Korrekturvorrichtung mehrfach ihre Gestalt ändert, z. B. um einen Zahn über eine größere Strecke in seiner Stellung zu ändern. Ein wiederholtes Aktivieren belastet das Material, weil es zu einem Abbau des SMPs, Hydrogels oder SMAs führt.

Alternative Verfahren zum Aktivieren vom Kieferkorrekturvorrichtungen offenbaren die WO 2009/118601 A2, WO 2006/071520 A2, WO 2017/079157 A1, US 2006/099545 A1, US 2005/277084 A1, US 2004/209218 A1 und die WO 00/32131 A1.

Es ist daher Aufgabe der Erfindung, ein schonendes Verfahren zum wiederholten Aktivieren einer kieferorthopädischen Korrekturvorrichtung vorzuschlagen.

Diese Aufgabe wird gelöst mit einem nicht-therapeutischen Verfahren zum wiederholten Aktivieren von bereits getragenen kieferorthopädischen Korrekturvorrichtungen nach Anspruch 1 mit einer bekannten kritischen Temperatur (Tkrit) und einer bekannten Glasübergangstemperatur (Tg), bei dem eine kieferorthopädische Korrekturvorrichtung auf eine Temperatur erwärmt wird, die über der kritischen Temperatur aber unter der bekannten Glasübergangstemperatur liegt. Die kritische Temperatur und die Glasübergangstemperatur werden jeweils vom Hersteller der kieferorthopädischen Korrekturvorrichtung angegeben. Die jeweilige kritische Temperatur richtet sich vor allem nach dem Material bzw. der Materialkombination, aus dem die kieferorthopädische Korrekturvorrichtung hergestellt ist. Es hat sich herausgestellt, dass eine erfindungsgemäß bereits getragene kieferorthopädische Korrekturvorrichtung, die also bereits durch ein erstes Aktivieren von der ersten gegebenen Gestalt in die zweite gegebene Gestalt gewechselt ist und die nun ihre Gestalt mindestens ein weiteres Mal in eine dritte gegebene Gestalt ändern soll, um einen Zahn weiter zu bewegen als bisher, wiederholt aktiviert werden kann. Das wiederholte Aktivieren erfolgt erfindungsgemäß bei einer Temperatur, die bevorzugt über der Körpertemperatur von 37 °C, jedenfalls über der kritischen Temperatur aber unter der bekannten Glasübergangstemperatur der kieferorthopädischen Korrekturvorrichtung liegt. Es hat sich also herausgestellt, dass es für ein weiteres Aktivieren der kieferorthopädischen Korrekturvorrichtung ausreichend ist, diese auf eine Temperatur zu erwärmen, die oberhalb der kritischen Temperatur aber unterhalb der bekannten Glasübergangstemperatur liegt. Wird die kieferorthopädische Korrekturvorrichtung wie bisher jedes Mal bis auf die Glasübergangstemperatur erwärmt, wird das Material zu sehr beansprucht. Auch die zum wiederholten Aktivieren eingestellte, niedrigere Temperatur bewirkt überraschenderweise zuverlässig ein Ändern z. B. der zweiten gegebenen Gestalt in eine dritte gegebene Gestalt.

Typische Materialien zum Herstellen von kieferorthopädischen Korrekturvorrichtungen sind Polymere mit Form-Erinnerungsvermögen (SMP bzw. shape memory polymers) darunter sowohl nicht-kristalline Polymere wie z. B. Polyethylen-Terephtalat-Glycol (PETG), aber auch kristalline Polymere wie z. B. thermoplastisches Polyurethan (TPU). Aber auch acrylbasierte Polymere, Hydrogele oder Oligomere sind geeignet zum Herstellen von kieferorthopädischen Korrekturvorrichtungen. Weiter sind Folien aus SMP zum Herstellen von kieferorthopädischen Korrekturvorrichtungen geeignet, insbesondere einlagige Folien aus wärmeformbaren, steifen Polyurethanfolien, die aus dem Homopolymer von Methylendiphenylisocyanat (MDI) und Hexandiol extrudiert werden, aber auch mehrlagige Folien, beispielsweise dreilagige Folien mit Außenlagen aus cycloaliphatischem Polyester und einer innenliegenden Lage aus thermoplastischem Polyether-Polyurethan. Die Außenlagen weisen eine Glasübergangstemperatur von Tg 90 °C bis 120 °C auf. Die Foliendicke beträgt von 0,38 mm bis 1,02 mm. Solche Folien werden z. B. von BayMaterials unter dem Markennamen Zendura ^{®} oder Zendura FLX ^{®} angeboten.

Nach einer vorteilhaften Ausführung des erfindungsgemäßen Verfahrens liegt die Temperatur, auf die die kieferorthopädische Korrekturvorrichtung beim wiederholten Aktivieren erwärmt wird, um mindestens 1 °C, vorteilhaft mindestens 2 °C, bevorzugt um mindestens 3 °C, 5 °C, 10 °C oder 15 °C unter der bekannten Glasübergangstemperatur. Dabei liegt diese Aktivierungstemperatur, wie vorstehend erläutert, über der kritischen Temperatur und bevorzugt über der Körpertemperatur. Je niedriger die Temperatur zum wiederholten Aktivieren eingestellt wird, desto schonender ist dies für das Material der kieferorthopädischen Korrekturvorrichtung. Nach einer weiter bevorzugten Ausführung des erfindungsgemäßen Verfahrens wird bei einer weiteren Aktivierung der kieferorthopädischen Korrekturvorrichtung die Temperatur gegenüber der Temperatur der vorangegangenen Aktivierung weiter erhöht, liegt jedoch immer noch unter der bekannten Glasübergangstemperatur. Diese Vorgaben werden auch dann eingehalten, wenn sich im Laufe der wiederholten Aktivierungen die Glasübergangstemperatur des Materials der kieferorthopädischen Korrekturvorrichtung ändert, insbesondere senkt.

Eine Weiterbildung der Erfindung sieht vor, dass die Temperatur, die zum weiteren Aktivieren der kieferorthopädischen Korrekturvorrichtung vorgesehen ist, für eine vorgegebene Zeit gehalten wird. Diese vorgegebene Zeit kann z. B. mindestens eine Minute betragen, sie kann aber auch mindestens 2 Minuten, 5 Minuten, 10 Minuten, 15 Minuten oder 30 Minuten oder länger betragen. Dadurch, dass die vorgegebene Temperatur über eine vorgegebene Zeit gehalten wird, wird gewährleistet, dass die wiederholte Aktivierung, also der gewünschte Wechsel, z. B. von der zweiten gegebenen Gestalt in die dritte gegebene Gestalt, vollständig erreicht wird.

Das erfindungsgemäße Verfahren sieht optional das Erwärmen für ein wiederholtes Aktivieren durch verschiedene Medien vor. Bei jedem Erwärmen der kieferorthopädischen Korrekturvorrichtung liegt die Temperatur unter der für die jeweils zu behandelnde Korrekturvorrichtung bekannten Glasübergangstemperatur, aber oberhalb der kritischen Temperatur und bevorzugt oberhalb der Körpertemperatur. Beispielsweise kann ein flüssiges Medium eingesetzt werden, insbesondere Wasser, eine Salzlösung, ein Lösungsmittel oder eine Mischung von mindestens zwei der vorgenannten flüssigen Medien. Es kann aber auch ein gasförmiges Medium eingesetzt werden, insbesondere Heißluft oder Wasserdampf. Schließlich kann Strahlung eingesetzt werden, insbesondere aus einer Infrarotquelle oder einer anderen Strahlungsquelle, die Wärme erzeugt. Es kann sich auch als vorteilhaft erweisen, eine kombinierte Anwendung von mindestens zwei der vorgenannten flüssigen und gasförmigen Medien und Strahlung anzuwenden. Die vorgenannten Wärmequellen eignen sich insbesondere für eine gleichmäßige Erwärmung der kieferorthopädischen Korrekturvorrichtung. Besonders bevorzugt sind der Einsatz flüssiger Medien oder der Einsatz verdampfter Flüssigkeiten, insbesondere Wasser, die die Wärme schnell und gleichmäßig auf die kieferorthopädische Korrekturvorrichtung übertragen.

Nach einer vorteilhaften Ausführung des erfindungsgemäßen Verfahrens wird die kieferorthopädische Korrekturvorrichtung nach dem Erwärmen, und nachdem die Wärme ggf. für eine vorgegebene Zeit gehalten wurde, gekühlt. Dadurch wird die durch das wiederholte Aktivieren erzeugte, geänderte Gestalt schnell fixiert und das wiederholte Aktivieren wird gegenüber einem nicht-forcierten Abkühlen auf Umgebungstemperatur beschleunigt.

Das vorstehend beschriebene, wiederholte Aktivieren einer kieferorthopädischen Korrekturvorrichtung, die bereits eine Gestaltänderung erfahren hat, insbesondere weil sie bereits vom Patienten getragen wurde, kann nach einer bevorzugten Ausführung der Erfindung zwei- oder mehrfach durchgeführt werden. Da das wiederholte Aktivieren der kieferorthopädischen Korrekturvorrichtung schonend erfolgt, kann die kieferorthopädische Korrekturvorrichtung länger eingesetzt werden und kann demzufolge weitere Gestaltänderungen erfahren. Dadurch kann eine kieferorthopädische Korrekturvorrichtung länger genutzt werden, was wirtschaftlicher ist.

Ein zwei- oder mehrfach durchgeführtes wiederholtes Aktivieren erfolgt nach einer vorteilhaften Ausführung des Verfahrens beim zweiten und ggf. jedem folgenden Mal bei einer Temperatur, die jeweils gleich oder höher ist als die Temperatur des vorangegangenen Aktivierens, die aber immer noch unterhalb der Glasübergangstemperatur liegt. Das Heraufsetzen der Temperatur erfolgt deshalb, weil sich bei Versuchen herausgestellt hat, dass jede weitere Gestaltänderung einen immer intensiveren Reiz bzw. eine immer intensivere Aktivierung erfordert. Wird also eine immer weiter höhere Temperatur für jede folgende wiederholte Aktivierung eingestellt, so resultiert dies in einer effizienten Gestaltänderung für die kieferorthopädische Korrekturvorrichtung und fördert die Effizienz der Behandlung. Wird die Temperatur bei einem weiteren Aktivieren gleich gelassen, erfolgt das Aktivieren über einen längeren Zeitraum, um die Korrekturvorrichtung einem intensiveren Reiz auszusetzen.

Eine weitere vorteilhafte Ausführung der Erfindung sieht vor, dass das zweite und ggf. jedes folgende wiederholte Aktivieren in einem vorgegebenen Zeitabstand erfolgt. Das Vorgeben eines definierten Zeitabstandes vor der nächsten weiteren Aktivierung gewährleistet, dass die kieferorthopädische Korrekturvorrichtung zu der gewünschten geänderten Zahnstellung führt. Der vorgegebene Abstand kann z. B. einen Tag, drei oder fünf Tage, eine Woche oder zwei Wochen, aber auch einen Monat betragen. Der vorgegebene Zeitabstand wird in Abhängigkeit von der jeweiligen Behandlung, z. B. von der gewünschten Bewegung festgelegt, die ein oder mehrere Zähne durch Einwirken der Korrekturvorrichtung ausführen sollen.

Das erfindungsgemäße Verfahren wird bevorzugt für solche kieferorthopädischen Korrekturvorrichtungen eingesetzt, die aus mindestens einem Werkstoff aus der Gruppe hergestellt ist, die ein Polymer mit Gestalterinnerungsvermögen (SMP), einer Mischung von Polymeren mit Gestalterinnerungsvermögen (SMP), einem Hydrogel und einer Legierung mit Gestalterinnerungsvermögen (SMA) umfasst. Aber auch Mischungen der vorgenannten Werkstoffe können in den Korrekturvorrichtungen enthalten sein. Die kieferorthopädische Korrekturvorrichtung kann als Draht, als Schiene oder als metallverstärkte Schiene aus SMP und / oder Hydrogel hergestellt sein. Besonders bevorzugt wird das erfindungsgemäße Verfahren für transparente kieferorthopädische Korrekturvorrichtungen eingesetzt.

Bei einer vorteilhaften Weiterbildung des erfindungsgemäßen Verfahrens wird eine Steuereinheit eingesetzt, die für mindestens eine weitere Aktivierung die Temperatur sowie optional die vorgegebene Zeit zum Erwärmen und/oder den zeitlichen Abstand zwischen zwei wiederholten Aktivierungen speichert und die ein Mittel zum Erwärmen steuert. Die Steuereinheit, die nach einer ersten Alternative für ein bestimmtes Material die Temperatur und die vorgegebene Zeit zum Erwärmen sowie optional den zeitlichen Abstand zwischen zwei Behandlungen bereits gespeichert hat, und die nach einer zweiten Alternative vom Benutzer eingegebene Daten speichert, vereinfacht das weitere Aktivieren einer kieferorthopädischen Korrekturvorrichtung und gestaltet dieses Verfahren dadurch sicherer.

Eine Vorrichtung zum Erwärmen und damit zum Aktivieren einer bereits getragenen kieferorthopädischen Korrekturvorrichtung wird nachfolgend beschrieben. Bevorzugt handelt es sich hierbei um eine kieferorthopädische Korrekturvorrichtung mit bekannter Glasübergangstemperatur, die auf eine Temperatur, die bevorzugt oberhalb der Körpertemperatur und oberhalb der kritischen Temperatur, aber unterhalb der bekannten Glasübergangstemperatur liegt, erwärmt werden soll. Die Vorrichtung ist jedoch auch zum Erwärmen anderer kieferorthopädischer Korrekturvorrichtungen geeignet. Die Vorrichtung zum Erwärmen weist eine Aufnahme für die kieferorthopädische Korrekturvorrichtung sowie Mittel zum Erwärmen auf. Die Aufnahme für die kieferorthopädische Korrekturvorrichtung und die Mittel zum Erwärmen sind einander so zugeordnet, dass die von den Mitteln zum Erwärmen abgegebene Wärme möglichst effizient auf die kieferorthopädische Korrekturvorrichtung übertragen wird, die durch die Aufnahme gehalten wird.

In einer einfachen Ausgestaltung kann die Vorrichtung für jedes weitere Erwärmen oder Aktivieren von Hand betätigt werden, beispielsweise indem die Mittel zum Erwärmen von Hand auf eine gewünschte Temperatur eingestellt werden und nach Erwärmen der kieferorthopädischen Korrekturvorrichtung wieder abgestellt werden. Bevorzugt weist die Vorrichtung jedoch eine Steuereinheit auf, die dazu ausgelegt ist, für mindestens eine weitere Aktivierung die Mittel zum Erwärmen zu steuern, insbesondere die Temperatur sowie optional die vorgegebene Zeit zum Erwärmen und/oder den zeitlichen Abstand zwischen zwei wiederholten Aktivierungen. Wie vorstehend beschrieben, gestaltet eine solche Steuereinheit das weitere Aktivieren der kieferorthopädischen Korrekturvorrichtung sicherer und auch gleichmäßiger und damit schonender für die kieferorthopädische Korrekturvorrichtung.

Die Aufnahme der Vorrichtung zum Erwärmen bzw. Aktivieren kann vielfältig ausgestaltet sein, z. B. als Gestell oder als Korb, jeweils für mindestens eine kieferorthopädische Korrekturvorrichtung, auf oder in dem die kieferorthopädische Korrekturvorrichtung für eine weitere Aktivierung anzuordnen ist. Besonders geeignet ist ein Korb, der einfach zu handhaben ist, da die kieferorthopädische Korrekturvorrichtung für die Durchführung des erfindungsgemäßen Verfahrens in der Vorrichtung in der Regel keine speziell definierte Position einnehmen muss. Die Aufnahme kann als Gruppe von Erhebungen ausgebildet sein, auf bzw. zwischen denen die kieferorthopädische Korrekturvorrichtung annähernd ortsfest positioniert werden kann. Diese Erhebungen können annähernd stabförmig, konisch oder pyramidenförmig gestaltet sein. Die Erhebungen können von unterschiedlicher Höhe, unterschiedlichem Durchmesser und unterschiedlichem Abstand sein. Die Erhebungen sind bevorzugt elastisch und weisen, insbesondere am freien Ende, vorteilhaft eine gerundete Kontur auf, so dass die darauf bzw. dazwischen angeordnete Korrekturvorrichtung nicht beschädigt wird.

Nach einer vorteilhaften Weiterbildung kann die Vorrichtung zum Erwärmen bzw. Aktivieren einen Behälter zum Aufnehmen eines flüssigen oder gasförmigen Mediums oder von Strahlung aufweisen, wobei die Aufnahme in dem Behälter angeordnet ist. Die Vorrichtung kann als Behälter z. B. ein Schale umfassen, die so bemessen ist, dass die gewünschte Anzahl von kieferorthopädischen Korrekturvorrichtungen darin aufgenommen werden kann. Typische Größen können sein 50 ml Rauminhalt, 100 ml, 150 ml, 250 ml oder 500 ml Rauminhalt. Die Schale kann aus einem beliebigen Werkstoff gefertigt werden, z. B. aus Metall, Kunststoff, Glas oder Keramik, sofern der Werkstoff den Bedingungen des erfindungsgemäßen Verfahrens standhält.

Die Vorrichtung zum Erwärmen bzw. Aktivieren kann weiter einen Deckel aufweisen, der im Eingriff mit dem Behälter die kieferorthopädische Korrekturvorrichtung gegenüber der Umgebung abschließt. Behälter und Deckel können auch zum Aufbewahren der kieferorthopädischen Korrekturvorrichtung genutzt werden. Nach einer weiter bevorzugten Ausführung sind Behälter und Deckel mobil, sie können z. B. von einer Dockingstation entfernt werden, die z. B. die Steuerung für das Aktivieren einschließlich der Mittel zum Erwärmen aufweist. In einer einfachen Ausführung sind die Mittel zum Erwärmen, die Steuerung und ggf. vorhandene Sensoren in der Dockingstation angeordnet. Wird der Behälter von der Dockingstation entfernt, dann kann der Träger der Korrekturvorrichtung einen leichten und kompakten Behälter zum Aufbewahren der Korrekturvorrichtung mitnehmen. Vorteilhaft weist der Behälter jedoch selbst eine integrierte Steuerung sowie Mittel zum Erwärmen, zum Reinigen und/oder ggf. Sensoren auf. Weiter bevorzugt ist bei einer solchen Ausführung im Behälter oder im Deckel mindestens ein Energiespeicher, meist ein Gleichstromspeicher, angeordnet, der z. B. die Energie speichert, die z. B. für den Betrieb von Sensoren oder für mindestens einen Reinigungsvorgang erforderlich ist. In diesem Fall sind die Steuereinheit und die Mittel zum Erwärmen, die Mittel zum Reinigen und/oder die Sensoren ebenfalls im Behälter oder im Deckel angeordnet. Eine solche transportable Ausführung der Vorrichtung macht den Nutzer im Alltag oder bei Reisen unabhängig. Steht der Behälter mit der Dockingstation in Verbindung, können, insbesondere wenn Wechselstrom zur Verfügung steht, alle Funktionen des Gerätes einschließlich der Aktivierung ausgeführt werden.

Die Mittel zum Erwärmen können beispielsweise eine Heizung umfassen, insbesondere eine elektrisch betriebene Heizung, die ein flüssiges oder gasförmige Medium erhitzt; sie können aber auch eine Strahlenquelle umfassen. Weist die Vorrichtung eine Schale auf, kann diese zum Übertragen der Wärme von den Mitteln zum Erwärmen auf das flüssige oder gasförmige Medium genutzt werden. Als Strahlenquelle kann die Vorrichtung insbesondere eine Infrarotquelle aufweisen.

Optional kann die Vorrichtung zum Erwärmen bzw. Aktivieren auch ein Mittel zum Kühlen aufweisen, das nach Ablauf der vorgegebenen Zeit zum Erwärmen die kieferorthopädische Korrekturvorrichtung auf Umgebungstemperatur oder darunter kühlt, um die durch das weitere Aktivieren geänderte Gestalt der kieferorthopädischen Korrekturvorrichtung zu fixieren. Das Kühlen der kieferorthopädischen Korrekturvorrichtung gewährleistet, dass die geänderte Gestalt sicher fixiert wird und dass die Vorrichtung kurzfristig wieder gebrauchsbereit ist. Die Mittel zum Kühlen können für den Einsatz gasförmiger oder flüssiger Kühlmedien ausgelegt sein, z. B. für den Einsatz von kalter Luft oder kaltem Wasser.

Weiter optional kann die Vorrichtung zum Erwärmen bzw. Aktivieren Mittel zum Reinigen der kieferorthopädischen Korrekturvorrichtung aufweisen, z. B. eine Ultraschallquelle, insbesondere in Verbindung mit einem flüssigen Medium zum Erwärmen der kieferorthopädischen Korrekturvorrichtung.

Die Bedienung der Vorrichtung zum Erwärmen bzw. Aktivieren wird sehr vereinfacht, wenn diese in bevorzugter Weiterbildung ein Panel zum Einstellen der Steuereinheit und zum Überwachen des weiteren Aktivierens aufweist. Das Panel kann Mittel zum Eingeben aufweisen, die z. B. über diese Mittel eingegebene Daten in der Steuereinheit speichern oder die die Vorrichtung ein- oder ausschalten. Das Panel weist vorteilhaft aber auch eine Anzeige bzw. einen Bildschirm auf, der z. B. den Stand der gerade ablaufenden weiteren Aktivierung anzeigt, z. B. den Fortschritt des Aktivierens oder die noch verbleibende Zeit bis zum Abschluss der Vorrichtung. Schließlich kann im Rahmen einer eigenständigen erfinderischen Lösung, die auch unabhängig von der Art und Weise des Aktivierens der jeweiligen Korrekturvorrichtung betrieben werden kann, die Vorrichtung zum Erwärmen bzw. Aktivieren der kieferorthopädischen Korrekturvorrichtung Mittel zum Erfassen der Verweildauer der kieferorthopädischen Korrekturvorrichtung aufweisen. Das Vorhandensein der kieferorthopädischen Korrekturvorrichtung wird bei dieser Ausführung durch Sensoren erfasst und die Sensorsignale werden in einer Steuereinheit ausgewertet und optional gespeichert. Als Sensor kommen alle Messvorrichtungen in Frage, die das Vorhandensein der Korrekturvorrichtung in der Vorrichtung zum Erwärmen erfassen können. Bevorzugt wird ein Sensor eingesetzt, der mittels elektromagnetischer Wellen bzw. der Reflexion elektromagnetischer Wellen das Vorhandensein der Korrekturvorrichtung erfasst. Ein Sensor kann z. B. ein optischer Sensor wie beispielsweise ein Infrarot-Sensor oder akustischer Sensor wie z. B. ein Ultraschall-Sensor sein. Es kann aber auch ein Berührungssensor sein. Dabei wird davon ausgegangen, dass sich die kieferorthopädische Korrekturvorrichtung entweder im Behälter befindet oder dass sie getragen wird.

Die Steuereinheit berechnet z. B. die Dauer des Aufenthalts der Korrekturvorrichtung in der Vorrichtung zum Aktivieren jeweils bezogen auf die Zeitdauer zwischen zwei Aktivierungsschritten. Ein Aktivierungsschritt ist der Zeitabstand zwischen einer ersten und einer darauffolgenden Aktivierung der Korrekturvorrichtung. Des Weiteren ist in der Steuereinheit die Anzahl der Stunden oder Minuten gespeichert, die die Korrekturvorrichtung im jeweiligen Aktivierungsschritt mindestens getragen werden soll. Befindet sich die Korrekturvorrichtung der Auswertung zufolge zu lange in der Vorrichtung, dann wurde entsprechend die kieferorthopädische Korrekturvorrichtung nicht lang genug getragen, um die gewünschte bzw. berechnete Veränderung in der Zahnstellung zu bewirken.

Die Steuereinheit berechnet die Differenz zwischen der erforderlichen Dauer des Tragens der Korrekturvorrichtung und der tatsächlichen Dauer des Tragens der Korrekturvorrichtung und speichert diese Differenz als Fehlzeit für den jeweiligen Aktivierungsschritt. Auch ein über die vorgesehene Zeit des Tragens hinausgehendes Tragen der Korrekturvorrichtung kann erfasst werden und es könnte die Zeit bis zum nächsten Aktivierungsschritt neu berechnet und verkürzt werden. Davon kann in Ausnahmefällen Gebrauch gemacht werden, wenn eine Zahnkorrektur z. B. besonders schnell erfolgen soll.

Die Steuereinheit kann nach einer ersten Alternative selbst den Zeitraum bis zum nächsten Aktivierungsschritt neu berechnen und verlängern, um sicherzustellen, dass die Korrekturvorrichtung ausreichend lange getragen wurde, so dass gewährleistet ist, dass die Korrekturvorrichtung für den jeweiligen Aktivierungsschritt ausreichend lange getragen wurde, um die gewünschte Zahnbewegung herbeizuführen. Nach einer zweiten Alternative kann die Steuereinheit diese Fehlzeit an das Labor oder den Zahnarzt weiterleiten, der den Träger der Korrekturvorrichtung betreut, damit dort ggf. eine Neuberechnung oder Nachberechnung der Zeitdauer bis zum nächsten Aktivierungsschritt berechnet wird. Nach einer dritten Alternative kann die Steuereinheit die Fehlzeit an ein Ausgabegerät weiterleiten, das dem Träger der Korrekturvorrichtung anzeigt, dass eine Fehlzeit erfasst wurde bzw. wie groß die Fehlzeit ist. Die Anzeige kann als Zeitangabe oder als grafische Darstellung erfolgen. Das Ausgabegerät kann z. B. ein Computer- oder ein Tabletbildschirm, oder ein Bildschirm eines Mobiltelefons sein. Die Anzeige erfolgt bevorzugt im Rahmen einer Anwendung (App), die ggf. auch weitere Informationen anzeigt wie z. B. den Termin für die nächste Aktivierung oder die Anzahl der bereits erfolgten bzw. noch ausstehenden Aktivierungen. Auf diese Weise kann der Träger selbst jederzeit kontrollieren, ob die Korrekturvorrichtung ausreichend getragen wird bzw. er kann das Tragen der Korrekturvorrichtung optimieren. Die drei vorstehend erläuterten Alternativen können auch kombiniert werden. Die Anwendung kann weiter dazu ausgelegt sein, Daten bzw. Information des Benutzers zu erfassen, z. B. Angaben zu Nebenwirkungen des Tragens der kieferorthopädischen Korrekturvorrichtung wie Schmerzen, Druckstellen oder dergleichen. Die Anwendung kann dazu ausgelegt sein, diese Daten zusammen mit den Daten über die Zeitdauer des Tragens der Korrekturvorrichtung bzw. Fehlzeiten oder mit Information zur Aktivierung oder Reinigung der Korrekturvorrichtung an den Zahnarzt oder das Labor zu übermitteln, von dem der Nutzer betreut wird.

Nach einer bevorzugten Ausführung ist in der Steuereinheit ein Schwellenwert gespeichert. Das Vorhandensein der Korrekturvorrichtung in der Vorrichtung zum Erwärmen wird bei dieser Ausführung nur gespeichert, wenn der Schwellenwert, der z. B. auf 10 Minuten, 20 Minuten oder 30 Minuten eingestellt sein kann, überschritten wird. Wird also die Korrekturvorrichtung nur kurz in der Vorrichtung zum Erwärmen abgelegt, weil der Träger z. B. die Zähne putzt oder etwas isst, so werden diese kurzen, üblichen Zeiträume nicht von der Steuereinheit gespeichert.

Nachfolgend werden Details des erfindungsgemäßen Verfahrens an Hand eines Ausführungsbeispiels erläutert. Es zeigt:
- Fig. 1: ein erstes Ausführungsbeispiel einer Vorrichtung,
- Fig. 2: ein zweites Ausführungsbeispiel einer Vorrichtung
- Fig. 3: ein drittes Ausführungsbeispiel einer Vorrichtung.
- Fig. 4: ein Ablaufschema zur optimierten Berechnung der Tragedauer einer kieferorthopädischen Korrekturvorrichtung

Das Ausführungsbeispiel betrifft eine kieferorthopädische Korrekturvorrichtung aus SMP (alternativ ist die Korrekturvorrichtung aus Hydrogel oder SMA oder einer Kombination aus mindestens zwei der genannten Werkstoffe, z. B. aus Zendura ^{®} oder Zendura FLX ^{®} hergestellt). Die kieferorthopädische Korrekturvorrichtung ist hier als Zahnschiene ausgebildet. Sie kann aber auch als Draht ausgebildet sein, der in Halterungen auf den Zähnen eingesetzt wird. Bevorzugt wird ein transparentes SMP eingesetzt, so dass die kieferorthopädische Korrekturvorrichtung ebenfalls transparent und damit beim Tragen unauffällig ist.

Die kieferorthopädische Korrekturvorrichtung ändert unter Einwirkung einer Aktivierung bzw. eines Reizes in einem ersten Schritt ihre Gestalt. So kann eine kieferorthopädische Korrekturvorrichtung in der zukünftigen, gewünschten Stellung S4 der korrigierten Zähne hergestellt werden und vor dem ersten Tragen von der zukünftigen, gewünschten Stellung durch erstmaliges Aktivieren in die Gestalt S1, die der aktuellen Stellung der zu korrigierenden Zähne entspricht, umgeformt werden. Das Aktivieren wird nachstehend näher erläutert. Diese kieferorthopädische Korrekturvorrichtung ist des Weiteren so ausgebildet, dass sie in Folge weiterer, nicht-therapeutischer Aktivierungen eine Gestalt S2 und nachfolgend S3 und schließlich wieder S4 annimmt, wobei sich die zu korrigierenden Zähne beispielsweise um 1 mm bis 2 mm bewegt haben werden, wenn die Korrektur durch die Gestalt S4 der kieferorthopädischen Korrekturvorrichtung abgeschlossen ist. Es wird ausdrücklich angemerkt, dass die kieferorthopädische Korrekturvorrichtung mehr oder weniger nicht-therapeutische Aktivierungen erfordern kann, je nachdem, wie viele Gestalten sie von der ursprünglichen Stellung der Zähne bis zum Erreichen der gewünschten Zahnstellung annehmen kann bzw. sollte. Auf diese Weise kann durch die kieferorthopädische Korrekturvorrichtung inkrementell Schritt für Schritt eine insgesamt umfassende Korrektur der Zahnstellung erreicht werden, ohne dass für den Patienten Schmerzen durch zu große Kräfte entstehen, die die kieferorthopädische Korrekturvorrichtung auf die Zähne ausübt. Gleichzeitig kann mit einer einzigen Korrekturvorrichtung so eine verhältnismäßig große Änderung der Zahnstellung erreicht werden.

Für den Fall dieses Ausführungsbeispiels wird unterstellt, dass die kieferorthopädische Korrekturvorrichtung in einer der Gestalten S1 bis S4 jeweils 2 Wochen von einem Patienten zu tragen ist, um die gewünschte Zahnkorrektur zu erreichen. Allgemein kann die Behandlungsdauer, also die Zeit, in der eine kieferorthopädische Korrekturvorrichtung in einer gegebenen Gestalt auf die zu korrigierenden Zähne einwirkt, von 5 Tagen bis zu 3 Monaten dauern, wobei Zeiträume von einer Woche bis zu zwei Monaten besonders üblich sind.

Jeweils nachdem ein Abschnitt der Behandlung abgeschlossen ist, kommt es zu einer weiteren Aktivierung der kieferorthopädischen Korrekturvorrichtung. Nach dem erfindungsgemäßen Verfahren wird die Korrekturvorrichtung erneut einem Reiz bzw. einer Aktivierung ausgesetzt, z. B. durch Einwirken von Wärme, bevorzugt übertragen durch ein flüssiges Medium, insbesondere Wasser oder eine wässrige Lösung. Während das erste Aktivieren nach dem Stand der Technik an sich erfordert, dass die kieferorthopädische Korrekturvorrichtung bis auf oder über die Glasübergangstemperatur Tg erwärmt wird, hat sich überraschenderweise herausgestellt, dass ein erstes Aktivieren bereits bei einer Temperatur deutlich unterhalb der Glasübergangstemperatur erfolgen kann, hier beispielsweise bei einer Temperatur, die 15 °C unterhalb der für die zu aktivierende Korrekturvorrichtung angegebenen Glasübergangstemperatur liegt. Das weitere Aktivieren, also das zweite oder dritte oder jedes folgende Aktivieren, kann bei einer Temperatur erfolgen, die oberhalb der Temperatur des ersten Aktivierens, jedoch mindestens 2 °C, wahlweise aber auch mindestens 5 °C, 10 °C oder 20 °C, unterhalb der jeweils bekannten Glasübergangstemperatur Tg liegt. Wenn beispielsweise die Glasübergangstemperatur der kieferorthopädischen Korrekturvorrichtung 75 °C beträgt, kann die Temperatur für das erste Aktivieren 60 °C und für das weitere Aktivieren 65 °C oder 70 °C betragen. Werden mehrere weitere Aktivierungen durchgeführt, können die Bedingungen für das weitere Aktivieren individuell eingestellt werden in dem Temperaturbereich, der zwischen der Temperatur für das erste Aktivieren und der bekannten Glasübergangstemperatur Tg liegt. Dabei wird entweder die Temperatur für eine zusätzliche weitere Aktivierung weiter heraufgesetzt. Die Bedingungen können aber auch intensiviert werden, indem z. B. die Temperatur auf gleicher Höhe gehalten und die Zeit des Aktivierens verlängert wird. Die nachfolgende Tabelle zeigt eine Auswahl möglicher Einstellungen von Temperatur und Zeit für das einmalige oder wiederholte Aktivieren von kieferorthopädischen Korrekturvorrichtungen:

**Tabelle 1 Einstellungen von Temperatur und Zeit für das Aktivieren von kieferorthopädischen Korrekturvorrichtungen**

| Kritische Temperatur T krit [°C] | Bekannte Glasübergangstemperatur Tg [°C] | Temperatur/Zeit 1. Aktivieren [°C/min] | Temperatur/Zeit 2. Aktivieren [°C/min] | Temperatur/Zeit 3. Aktivieren [°C/min] | Temperatur/Zeit 4. Aktivieren [°C/min] | Temperatur/Zeit 5. Aktivieren [°C/min] |
|---|---|---|---|---|---|---|
| 53 | 60 | 55/15 | - | - | - | - |
| 55 | 65 | 58/10 | 63/15 | - | - | - |
| 58 | 70 | 60/5 | 64/10 | 67/12 | - | - |
| 55 | 75 | 60/10 | 65/10 | 65/20 | 70/15 | - |
| 57 | 75 | 60/12 | 65/12 | 70/15 | 70/30 | 73/20 |

Bei PETG, einem mit Glykol modifizierten Polyethylenterephthalat, oder einem anderen wärmeformbaren Material liegt die Glasübergangstemperatur Tg üblicherweise zwischen 72 °C und 75 °C. Für ein thermoplastisches Material kann die Glasübergangstemperatur Tg beispielsweise auch zwischen 82 °C und 85 °C liegen. Für zahlreiche thermoplastische Werkstoffe lässt sich die Glasübergangstemperatur jedoch auch modifizieren und gezielt einstellen, z. B. durch Einsatz chemischer Komponenten.

Die vorstehende Tabelle zeigt deutlich, dass das erste Aktivieren jeweils mit einer Temperatur unterhalb der bekannten Glasübergangstemperatur Tg erfolgt. Dieses Aktivieren bewirkt eine Gestaltveränderung, deren Ausmaß vorgegeben ist. Jedes weitere nicht-therapeutische Aktivieren, hier ein zweites bis maximal ein fünftes Aktivieren, erfolgt entweder bei einer erhöhten Temperatur oder bei gleicher Temperatur aber längerer Aktivierungsdauer. Bei jeder Aktivierung wird dadurch gewährleistet, dass für die Korrekturvorrichtung ein stärkerer Reiz gesetzt wird, der die nächste gewünschte Gestaltveränderung bewirkt.

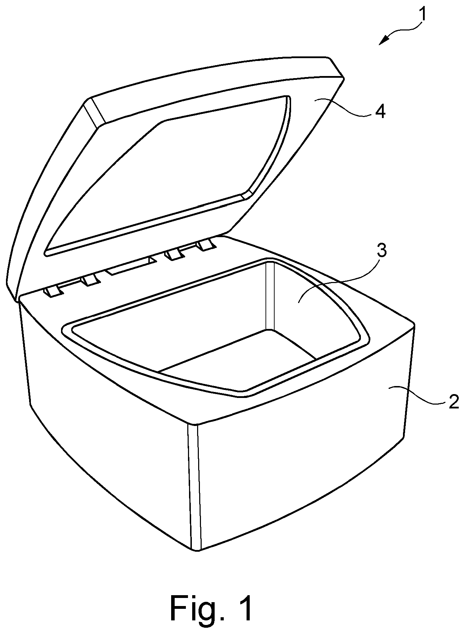

Das Verfahren der weiteren nicht-therapeutischen Aktivierung wird bevorzugt mit der Vorrichtung durchgeführt, die beispielhaft in verschiedenen Ausführungen in den Fig. 1, 2 und 3 dargestellt ist. Soweit die Vorrichtungen dieselben Bauteile aufweisen, werden sie nachfolgend mit denselben Bezugszeichen versehen.

Die Vorrichtung 1 gemäß Fig. 1 weist ein Gehäuse 2 auf, in das als Aufnahme eine Schale 3 eingesetzt ist. Die Schale 3 ist hier aus Metall, sie kann aber auch aus Kunststoff, Glas oder Keramik hergestellt sein. Sie weist ein Fassungsvermögen von 250 ml auf, kann aber bei Bedarf größer oder kleiner ausgeführt sein. Eine Schale 3 dieser Größe kann mehrere kieferorthopädische Korrekturvorrichtung aufnehmen. In der Schale befindet sich Wasser oder eine wässrige Lösung. Der wässrigen Lösung können z. B. Reinigungsmittel, Salze, Lösungsmittel oder dergleichen zugesetzt sein, wobei der Anteil von Wasser vorteilhaft bei über 50 Gew.-% bezogen auf das Gesamtvolumen der Flüssigkeit liegt. Die Schale 3 ist vorteilhaft durch einen Deckel 4 abgedeckt. Das Gehäuse 2 der Vorrichtung 1 ist bevorzugt thermisch isoliert.

Die kieferorthopädische Korrekturvorrichtung wird entweder unmittelbar in die Schale 3 gelegt oder in einem Korb oder Gestell in die Schale 3 eingesetzt, so dass sie von dem flüssigen Medium umgeben ist oder von einem gasförmigen Medium umströmt werden kann bzw. von einer Strahlenquelle gleichmäßig erwärmt werden kann.

Die Schale 3 ist durch eine Heizquelle, bevorzugt eine elektrische Heizung, beheizt, die im Gehäuse 2 angeordnet und in Fig. 1 nicht näher dargestellt ist. Die Heizquelle weist eine Leistung auf, die ausreicht, um das flüssige Medium auf die vorgegebene Temperatur, die unterhalb der Glasübergangstemperatur liegt, zu erwärmen. Üblicherweise weist die Heizquelle eine Leistung von 100 W bis 500 W auf. Die Stromversorgung kann durch Gleich- oder Wechselstrom erfolgen. Alternativ kann eine Heizquelle für Wasserdampf oder erwärmte Luft eingesetzt werden, wobei Wasserdampf oder erwärmte Luft dann z. B. durch ein Gebläse in die Schale geleitet werden können.

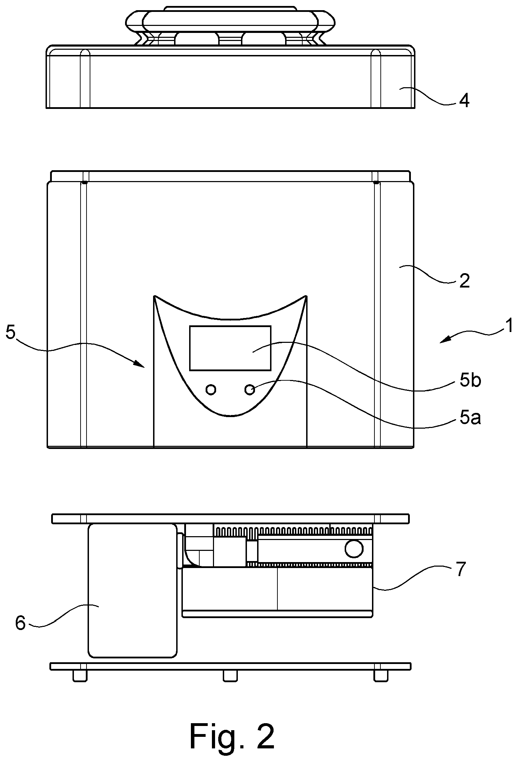

Die Vorrichtung 1 nach Fig. 2 weist sämtliche Merkmale der Ausführung nach Fig. 1 auf. Sie weist im Gehäuse eine nicht näher dargestellte Steuereinheit auf, die einen Speicher aufweist und die mit einem Panel 5 mit Ein-/Aus-Schalter sowie mit Eingabevorrichtung 5a und Anzeigevorrichtung 5b sowie mit den Mitteln 6 zum Erwärmen und ggf. weiteren Bauteilen verbunden ist, die zur Umsetzung des erfindungsgemäßen Verfahrens im oder am Gehäuse 2 angeordnet sind. Der Speicher der Steuereinheit wird entweder über die Eingabevorrichtung 5a des Panels 5 mit Vorgaben für die Temperatur gefüllt, die zum weiteren Aktivieren zu erreichen ist, sowie ggf. mit der Zeit, über die die Temperatur zu halten ist. Alternativ kann der Speicher mit einem oder mehreren Programmen ausgestattet sein, die jeweils für bestimmte weitere Aktivierungen eine Temperatur und optional eine Zeit vorgeben, über die die vorgegebene Temperatur zu halten ist. Optional kann der Speicher auch Informationen zum Abstand der weiteren Aktivierungen, zur Reinigung oder zum Kühlen der kieferorthopädischen Korrekturvorrichtung aufnehmen und ggf. in die Programme integrieren. Während erfahrenes Fachpersonal die Vorrichtung unmittelbar durch die Eingabevorrichtung bedienen kann, empfiehlt es sich dagegen, vorgegebene Programme im Speicher zu hinterlegen, wenn die Patienten die Vorrichtung Zuhause nutzen. Die Anzeigevorrichtung zeigt z. B. eine Auswahl von Eingabeparametern für beispielsweise Temperatur oder Zeit, das oder die zur Auswahl stehenden Programme, den Status der Vorrichtung während des Betriebs mit Anzeige der Temperatur und ggf. der Restlaufzeit der weiteren Aktivierung.

Die Vorrichtung 1, insbesondere die Steuereinheit, kann mit externen Mitteln zum Überwachen und Steuern bzw. Kontrollieren der Funktion der Vorrichtung, die hier nicht näher dargestellt sind, in Verbindung stehen. So kann die Vorrichtung mit einem elektronischen Gerät wie einem Smartphone, einem Tablet oder einem Computer in Verbindung stehen und über dieses betätigt, überwacht, gesteuert und kontrolliert werden. Dies kann über spezielle Software, z. B. eine App erfolgen. Eine solche Anordnung von Vorrichtung in Verbindung mit einem elektronischen Gerät ist insbesondere sinnvoll, damit z. B. Fachpersonal den Einsatz der Vorrichtung durch Patienten überwachen bzw. kontrollieren kann. Patienten können sich z. B. über die Restlaufzeit eines Aktivierungsvorgangs informieren oder einen solchen Vorgang auslösen, ohne die Vorrichtung selbst betätigen zu müssen.

Die in Fig. 2 dargestellte Vorrichtung 1 weist im Gehäuse angeordnete Mittel 7 zum Kühlen auf, die die kieferorthopädische Korrekturvorrichtung nach dem weiteren Aktivieren auf Umgebungstemperatur kühlt. Die Vorrichtung kann z. B. so ausgebildet sein, dass nach dem Abschluss des weiteren Aktivierens das flüssige Medium aus der Schale entfernt wird, z. B. durch Öffnen eines Abflusses, und das anschließend Luft durch ein Gebläse auf die kieferorthopädische Korrekturvorrichtung geblasen wird. Optional kann die Luft gekühlt sein, doch bereits beschleunigte Luft wirkt kühlend. In einer einfachen Ausführung kann die Vorrichtung auch ohne Mittel zum Kühlen ausgestattet sein.

Die Vorrichtung 1 weist optional weiter eine im Gehäuse 3 angeordnete, hier nicht näher dargestellte Ultraschallquelle auf, die vor, während oder nach dem weiteren Aktivieren die kieferorthopädische Korrekturvorrichtung reinigt.

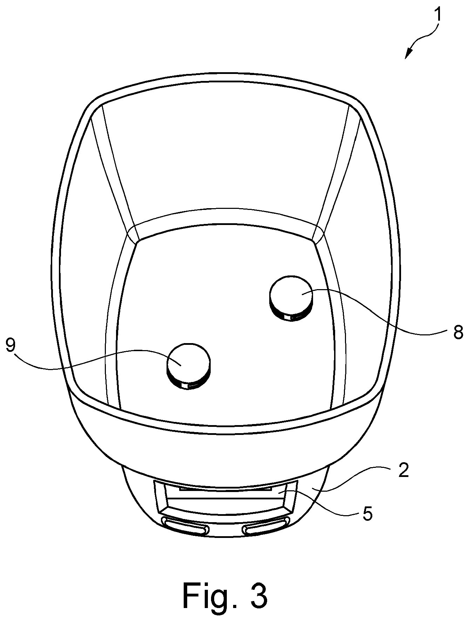

Insbesondere für den Gebrauch im professionellen Umfeld ist die in Fig. 3 gezeigte Vorrichtung 1 geeignet. Sie weist -bis auf den Deckel 4- sämtliche Merkmale der Ausführung gemäß Fig. 2 auf. Die Vorrichtung nach Fig. 3 kann einen separaten Deckel aufweisen. Die Schale 2 ist jedoch mit 400 ml geräumiger als die vorstehend beschriebenen Schalen. Am Boden der Schale ist ein Abfluss 8 für die zum Erwärmen eingesetzte Flüssigkeit sowie ein Einlass 9 für ein Kühlmedium, hier z. B. gekühlte Luft oder kalte Flüssigkeit vorgesehen. Durch die Mittel zum Kühlen wird die geänderte Gestalt der Korrekturvorrichtung schnell fixiert und die Vorrichtung ist bereit für den nächsten Aktivierungsvorgang, mit dem eine weitere Gestaltänderung einer kieferorthopädischen Korrekturvorrichtung bewirkt werden soll.

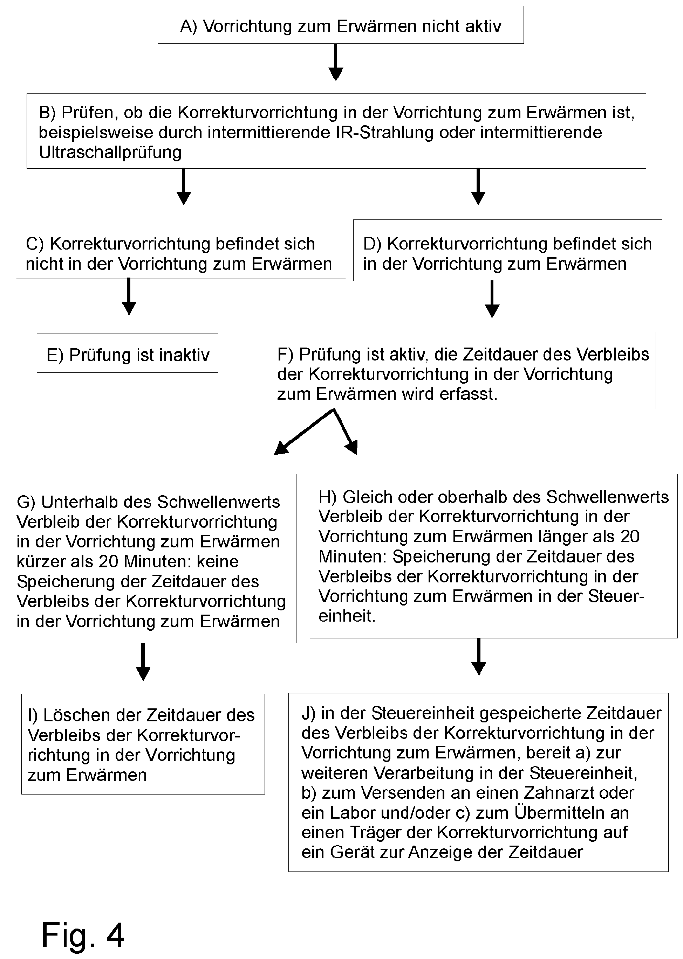

Fig. 4 zeigt ein Ablaufschema, das die Funktionsweise von Mitteln zum Erfassen der Verweildauer einer kieferorthopädischen Korrekturvorrichtung in einer Vorrichtung zum Erwärmen bzw. Aktivieren erläutert. Die Mittel zum Erfassen weisen beispielsweise einen optischen Sensor wie einen IR-Sensor auf, der das Vorhandensein der kieferorthopädischen Korrekturvorrichtung in der Vorrichtung zum Erwärmen kontrolliert, z. B. indem der Sensor im Abstand von Sekunden oder Minuten aktiviert wird und jeweils ein Sensorsignal an die Steuereinheit abgibt, über das Vorhandensein oder das Fehlen der Korrekturvorrichtung in der Vorrichtung zum Erwärmen. Alternativ kann auch ein Ultraschallsensor oder ein anderer Sensor eingesetzt werden, der das Vorhandensein oder das Fehlen der Korrekturvorrichtung detektieren kann.

Wird keine Korrekturvorrichtung detektiert, läuft die Überwachung mit regelmäßiger Überprüfung des Vorhandenseins der kieferorthopädischen Korrekturvorrichtung weiter. Wird die Korrekturvorrichtung in der Vorrichtung zum Erwärmen erfasst, so erfasst und speichert die Steuereinheit jeweils den Zeitraum, in dem die Korrekturvorrichtung sich in der Vorrichtung zum Erwärmen befindet und setzt diesen Zeitraum in Verbindung zu einer vorgegebenen Zeitdauer. Optional kann eine zweite Zeitdauer, die als Schwellenwert dient, in der Steuereinheit gespeichert sein. Ist der Verweil-Zeitraum kürzer als der Schwellenwert, wird diese Verweildauer nicht gespeichert und geht nicht in die nachfolgenden Berechnungen ein. Ein Schwellenwert kann z. B. 20 Minuten betragen, so dass beispielsweise das Einsetzen der kieferorthopädischen Korrekturvorrichtung in die Vorrichtung zum Erwärmen bzw. Aktivieren während der Zeitdauer des Zähneputzens nicht gespeichert wird.

Ist die Verweildauer der Korrekturvorrichtung in der Vorrichtung zum Erwärmen dagegen länger als die Zeitdauer des Schwellenwerts, oder ist kein Schwellenwert eingegeben, so wird diese Zeitdauer von der Steuereinheit erfasst und gespeichert. Die Steuereinheit kann die erfasste Verweildauer der Korrekturvorrichtung entweder weitergeben an ein Labor oder eine Zahnarztpraxis, die diese Daten für die Neu- oder Nachberechnung der Zeitdauer bis zur nächsten Aktivierung der kieferorthopädischen Korrekturvorrichtung nutzen. Die Steuereinheit kann die erfasste Verweildauer auch an ein Anzeige- oder Ausgabegerät weitergeben, die dem Träger der kieferorthopädischen Korrekturvorrichtung mitteilt, wie lange die Korrekturvorrichtung bereits getragen wurde. Das Anzeige- oder Ausgabegerät kann die Vorrichtung zum Erwärmen bzw. Aktivieren sein, es kann aber auch eine Anwendung (App) sein, die auf dem Computer, Tablet oder Mobiltelefon des Trägers angezeigt wird. Diese Information kann z. B. auch in grafischer Form wiedergegeben werden, die anzeigt, welcher Anteil der für den jeweiligen Aktivierungsschritt vorgegebenen Zeitdauer des Tragens der Korrekturvorrichtung bereits erreicht wurde. Auf diese Weise wird dem Träger der Korrekturvorrichtung ein Werkzeug an die Hand gegeben, mit dessen Hilfe er sein Verhalten in Bezug auf das Tragen der Korrekturvorrichtung optimieren kann.

## Patentansprüche

1. Nicht-therapeutisches Verfahren zum wiederholten Aktivieren von bereits getragenen kieferorthopädischen Korrekturvorrichtungen mit einer bekannten kritischen Temperatur (Tkrit) und einer über der kritischen Temperatur liegenden Glasübergangstemperatur (Tg), bei dem eine kieferorthopädische Korrekturvorrichtung auf eine Temperatur erwärmt wird, die über der kritischen Temperatur aber unter der bekannten Glasübergangstemperatur liegt.

2. Nicht-therapeutisches Verfahren nach Anspruch 1, **dadurch gekennzeichnet, dass** die Temperatur um mindestens 2 °C, bevorzugt um mindestens 3 °C, 5 °C oder 10 °C unter der bekannten Glasübergangstemperatur liegt.

3. Nicht-therapeutisches Verfahren nach Anspruch 1 oder 2, **dadurch gekennzeichnet, dass** die Temperatur für eine vorgegebene Zeit gehalten wird, wobei die Temperatur vorteilhaft für mindestens 1 Minute gehalten wird, bevorzugt für jeweils mindestens 2 Minuten, 5 Minuten, 10 Minuten, 15 Minuten oder 30 Minuten gehalten wird.

4. Nicht-therapeutisches Verfahren nach einem der vorstehenden Ansprüche, **dadurch gekennzeichnet, dass** das Erwärmen durch ein flüssiges Medium, insbesondere Wasser, eine Salzlösung, ein Lösungsmittel oder durch eine Mischung von mindestens zwei der vorgenannten flüssigen Medien, durch ein gasförmiges Medium, insbesondere Wasserdampf, durch Strahlung, insbesondere Infrarotstrahlung oder Heißluft oder durch eine kombinierte Anwendung von mindestens zwei der vorgenannten flüssigen und gasförmigen Medien und Strahlung erfolgt.

5. Nicht-therapeutisches Verfahren nach mindestens einem der vorstehenden Ansprüche, **dadurch gekennzeichnet, dass** das wiederholte Aktivieren beim zweiten und ggf. jedem folgenden Mal bei einer Temperatur erfolgt, die jeweils höher ist als die Temperatur des vorangegangenen Aktivierens.

6. Nicht-therapeutisches Verfahren nach mindestens einem der vorstehenden Ansprüche, **dadurch gekennzeichnet, dass** das zweite und ggf. jedes folgende Aktivieren in einem vorgegebenen zeitlichen Abstand erfolgt.

7. Nicht-therapeutisches Verfahren nach mindestens einem der vorstehenden Ansprüche, **dadurch gekennzeichnet, dass** die kieferorthopädische Korrekturvorrichtung hergestellt ist aus mindestens einem Werkstoff oder einer Mischung von Werkstoffen aus der Gruppe, die ein Polymer mit Gestalterinnerungsvermögen, eine Mischung von Polymeren mit Gestalterinnerungsvermögen, ein Hydrogel und ein Metall oder eine Legierung mit Gestalterinnerungsvermögen umfasst.

8. Nicht-therapeutisches Verfahren nach mindestens einem der vorstehenden Ansprüche, **dadurch gekennzeichnet, dass** eine Steuereinheit eingesetzt wird, die für mindestens eine weitere Aktivierung die Temperatur sowie optional die vorgegebene Zeit zum Erwärmen und/oder den zeitlichen Abstand zwischen zwei wiederholten Aktivierungen speichert und die ein Mittel zum Erwärmen steuert.

9. Nicht-therapeutisches Verfahren nach einem der vorstehenden Ansprüche, **dadurch gekennzeichnet, dass** ein Sensor das Vorhandensein der kieferorthopädischen Korrekturvorrichtung in einer Vorrichtung zum Erwärmen erfasst, und dass die Steuereinheit die Signale dieses Sensors erfasst.

## Claims

1. Non-therapeutic method for the repeated activation of orthodontic correction devices that have already been worn with a known critical temperature (Tkrit) and a glass transition temperature (Tg) lying above the critical temperature, in which an orthodontic correction device is heated to a temperature that lies above the critical temperature but below the known glass transition temperature.

2. Non-therapeutic method according to claim 1, wherein the temperature lies by at least 2°C, preferably by at least 3°C, 5°C or 10°C below the known glass transition temperature.

3. Non-therapeutic method according to claim 1 or 2, wherein the temperature is maintained for a predefined time, wherein the temperature is advantageously maintained for at least 1 minute, preferably for in each case at least 2 minutes, 5 minutes, 10 minutes, 15 minutes or 30 minutes.

4. Non-therapeutic method according to any one of the preceding claims, wherein the heating is effected by a liquid medium, in particular water, a salt solution, a solvent or by a mixture of at least two of the aforementioned liquid media, by a gaseous medium, in particular water vapor, by radiation, in particular infrared radiation, or hot air or by a combined application of at least two of the aforementioned liquid and gaseous media and radiation.

5. Non-therapeutic method according to at least one of the preceding claims, wherein the repeated activation is effected the second time and, if applicable, each following time at a temperature that is in each case higher than the temperature of the previous activation.

6. Non-therapeutic method according to at least one of the preceding claims, wherein the second and, if applicable, each following activation is effected at a predefined time interval.

7. Non-therapeutic method according to at least one of the preceding claims, wherein the orthodontic correction device is manufactured from at least one material or a mixture of materials from the group that comprises a shape memory polymer, a mixture of shape memory polymers, a hydrogel and a metal or an alloy with shape memory properties.

8. Non-therapeutic method according to at least one of the preceding claims, wherein a control unit is used which stores the temperature and, optionally, the predefined time for heating and/or the time interval between two repeated activations for at least one further activation and which controls a means for heating.

9. Non-therapeutic method according to any one of the preceding claims, wherein a sensor captures the presence of the orthodontic correction device in a device for heating, and the control unit captures the signals of said sensor.

## Revendications

1. Procédé non thérapeutique pour l'activation répétée des dispositifs de correction orthodontique déjà portés ayant une température critique connue (Tkrit) et une température de transition vitreuse (Tg) supérieure à la température critique, dans lequel un dispositif de correction orthodontique est chauffé à une température supérieure à la température critique mais inférieure à la température de transition vitreuse connue.

2. Procédé non thérapeutique selon la revendication 1, **caractérisé en ce que** la température est inférieure à la température de transition vitreuse connue d'au moins 2 °C, de préférence d'au moins 3 °C, 5 °C ou 10 °C.

3. Procédé non thérapeutique selon la revendication 1 ou 2, **caractérisé en ce que** la température est maintenue pendant une durée prédéterminée, la température étant avantageusement maintenue pendant au moins 1 minute, de préférence pendant au moins 2 minutes, 5 minutes, 10 minutes, 15 minutes ou 30 minutes respectivement.

4. Procédé non thérapeutique selon l'une quelconque des revendications précédentes, **caractérisé en ce que** le chauffage est réalisé par un milieu liquide, notamment de l'eau, une solution saline, un solvant ou par un mélange d'au moins deux des milieux liquides précités, par un milieu gazeux, notamment de la vapeur d'eau, par un rayonnement, notamment un rayonnement infrarouge ou de l'air chaud, ou par une application combinée d'au moins deux des milieux liquides et gazeux précités et d'un rayonnement.

5. Procédé non thérapeutique selon au moins l'une des revendications précédentes, **caractérisé en ce que** l'activation répétée est effectuée, la deuxième fois et éventuellement chaque fois suivante, à une température qui est chaque fois supérieure à la température de l'activation précédente.

6. Procédé non thérapeutique selon au moins l'une des revendications précédentes, **caractérisé en ce que** la deuxième activation et, le cas échéant, chaque activation suivante sont effectuées à un intervalle de temps prédéterminé.

7. Procédé non thérapeutique selon au moins l'une des revendications précédentes, **caractérisé en ce que** le dispositif de correction orthodontique est fabriqué à partir d'au moins un matériau ou un mélange de matériaux choisi dans le groupe comprenant un polymère ayant une mémoire de forme, un mélange de polymères ayant une mémoire de forme, un hydrogel et un métal ou un alliage ayant une mémoire de forme.

8. Procédé non thérapeutique selon au moins l'une des revendications précédentes, **caractérisé en ce que** l'on utilise une unité de commande qui, pour au moins une activation supplémentaire, mémorise la température ainsi que, éventuellement, le temps de chauffage prédéterminé et/ou l'intervalle de temps entre deux activations répétées, et qui commande un moyen de chauffage.

9. Procédé non thérapeutique selon l'une des revendications précédentes, **caractérisé en ce qu'**un capteur détecte la présence du dispositif de correction orthodontique dans un moyen de chauffage, et **en ce que** l'unité de commande détecte les signaux de ce capteur.
